# EUROPÄISCHE PATENTSCHRIFT

(11) **EP 3 484 685 B1**
(45) Veröffentlichungstag und Bekanntmachung des Hinweises auf die Patenterteilung: **27.05.2020**
(21) Anmeldenummer: 17751592.1
(22) Anmeldetag: 11.07.2017
(51) Int. Cl.: B29C 45/28, B29C 45/76

(54) **VORRICHTUNG FÜR DIE HERSTELLUNG VON BAUTEILEN IM SPRITZGUSSVERFAHREN UMFASSEND EIN REGULIERSYSTEM**
DEVICE FOR PRODUCING COMPONENTS IN AN INJECTION MOLDING METHOD, COMPRISING A REGULATING SYSTEM
DISPOSITIF POUR FABRIQUER DES PIÈCES DANS UN PROCÉDÉ DE MOULAGE PAR INJECTION COMPRENANT UN SYSTÈME RÉGULATEUR

(30) Priorität: 15.07.2016 AT 3412016
(43) Veröffentlichungstag der Anmeldung: 22.05.2019
(73) Patentinhaber: NEXUS ELASTOMER SYSTEMS GMBH, 4653 Eberstalzell (AT)
(72) Erfinder: WAIZENAUER, Dietmar, 4531 Kematen an der Krems (AT); WAIZENAUER, Bernhard, 4600 Wels (AT)
(74) Vertreter: Ellmeyer, Wolfgang
(86) Internationale Anmeldenummer: PCT/AT2017/060172
(87) Internationale Veröffentlichungsnummer: WO 2018/009951

(56) Entgegenhaltungen:
- EP-A2- 1 447 200
- WO-A1-2016/081713
- WO-A2-01/08462
- JP-A- H 091 600

## Beschreibung

Die Erfindung betrifft eine Vorrichtung für die Herstellung von Bauteilen im Spritzgussverfahren.

### Stand der Technik

Einspritzdüsen von Spritzgießwerkzeugen sind zum Teil mit Verschlussnadeln ausgestattet, um den Materialfluss abzusperren. Solche Nadelverschlusssysteme für Spritzgießwerkzeuge werden pneumatisch, elektrisch oder hydraulisch angetrieben. Die Druckschriften WO 01/08462 A2, WO 2016/081713 A1, EP 1 447 200 A2 und JP H09 1600 A behandeln Nadelverschlusssyteme für Spritzgießwerkzeuge.

Im Spritzprozess von Mehrkavitäten-Werkzeugen treten unterschiedliche Füllstände der einzelnen Kavitäten auf, welche aufgrund von Fließeigenschaften, unterschiedlichen Kanallängen und Fertigungsdifferenzen bzw. Toleranzen auftreten.

Um die produzierten Teile gleich füllen zu können, werden Reguliersysteme eingesetzt, welche die Materialmenge jeder einzelnen Spritzdüse individuell reduzieren. Nach derzeitigem Stand der Technik bewertet der Maschinenbediener die Füllgrade der einzelnen Kavitäten nach dem Spritzzyklus anhand der produzierten Teile und stellt die Regulierung nach eigenem Ermessen ein, um eine gleichmäßige Füllung zu erhalten bzw. ein einwandfreies Produkt zu produzieren. Da sich die Regulierung der einzelnen Kavitäten gegenseitig beeinflussen, ist der manuelle Einstellprozess langwierig und erfordert Erfahrung der Bediener.

Grundsätzlich ist zwischen folgenden Arten der Regulierung zu unterscheiden:
- Regulierung mittels Drosselung
- Regulierung über zeitliche Steuerung der Nadelbewegung Die Regulierung mittels Drosselung kann sehr einfach durch Einbringen einer zusätzlichen Drosselstrecke im Materialfluss erreicht werden. Alle Nadeln können hier zum gleichen Zeitpunkt geöffnet und geschlossen werden. Die Regulierung erfolgt über die unterschiedlichen Druckabfälle der Drosselstellen.

Kleine Schussgewichte können mit mechanisch arbeitenden Drosselsystemen (Drosselstrecke) jedoch nicht mehr prozesssicher geregelt werden, wenn geringe Flussgeschwindigkeiten herrschen.

Die Regulierung über zeitliche Steuerung (Kaskadierung) der Nadelbewegung ist aufwendiger. Bei einer kaskadierten pneumatischen oder hydraulischen Steuerung wird jede Nadel mit einem eigenen Ventil gesteuert. Es ist somit möglich, die Nadeln gestaffelt zu öffnen und zu schließen. Die Realisierung erfordert eine enorm hohe Anzahl an Kanälen für die Medienleitungen in der Spritzgussvorrichtung. Die Regulierung erfolgt über die unterschiedlichen Öffnungszeiten der Nadeln und der damit einhergehenden Füllzeiten. Zeitgesteuerte Systeme arbeiten unabhängig der Durchflussgeschwindigkeiten und sind auch bei kleinsten Schussgewichten einsetzbar.

Ziel der Erfindung ist ein einfaches System, welches die Füllgrade der einzelnen Kavitäten bei Nadelverschlusssystemen variieren kann. Es soll einfach nachrüstbar bei bestehenden Systemen sein. Der Abstand zwischen den einzelnen Kavitäten soll auf ein Minimum reduziert und nicht durch das Einstellsystem vergrößert werden.

Erfindungsgemäß wird dies dadurch erreicht, dass eine Vorrichtung bereitgestellt wird, umfassend
zumindest eine Kavität zur Formung jeweils eines Produkts, zumindest eine Einspritzdüse, durch die Material in die Kavität eingespritzt wird,
eine Formtrennung,
einen Verteilerkanal,
eine Medienversorgung,
einen Abluft- bzw. Rücklaufkanal,
zumindest eine Verschlussnadel, die die kraft- oder formschlüssig mit einem Kolben verbunden ist und die in die Einspritzdüse eingeführt ist,
zumindest ein Ventil zur Öffnung der Nadel sowie zumindest ein Ventil zum Schließen der Nadel,
wobei
das Ventil zur Öffnung der Nadel und das Ventil zum Schließen der Nadel unmittelbar anschließend an die Verschlussnadel angeordnet sind und
eine Steuereinheit für das Ventil zur Öffnung der Nadel und das Ventil zum Schließen der Nadel vorgesehen ist.

Die Erfindung umfasst die Ansteuerung von Nadelverschlusssystemen durch direkt an der Verschlussnadel (direkt am Aktor) sitzende Miniaturventile. Durch die kurzen Ansteuerwege wird die Reaktion der Aktoren auf ein Minimum reduziert. Zusätzlich ist der Platzbedarf im Gegensatz zu bestehenden mechanischen Drosselsystemen geringer, und Düsenabstände können auf ein Minimum reduziert werden.

Das Ventil kann beispielsweise ein 3/2- oder 5/2-Wegeventil sein, wobei sich die Zahlen auf "Anschlüsse/Wege" beziehen (ein "3/2-Wegeventil" bezeichnet beispielsweise ein Ventil mit 3 Anschlüssen und 2 Wegen; ein Anschluss kann beispielsweise ein Versorgungskanal, ein Arbeitskanal und ein Abluftkanal bzw. Rücklaufkanal sein; ein Weg kann beispielsweise "öffnen" oder "schließen" sein).

Es gibt kaskadierte Nadelverschlusssysteme am Markt. Die Ventile sitzen jedoch weit vom Aktor entfernt (außerhalb des Spritzgießwerkzeugs). Durch die notwendigen Querbohrungen für die Versorgung der Arbeitsleitungen der Kolben ist die Anzahl der einzelnen Nadeln begrenzt. Die Bohrungen sind arbeitsaufwändig. Zusätzlich dazu wird eine große Anzahl an Medienleitungen außerhalb des Werkzeuges benötigt. Die Wartung und Rüstung solcher Werkzeuge ist kompliziert und fehleranfällig.

Gegenüber kaskadierten Nadelverschlusssystemen mit externen Ventilen ergeben sich folgende Vorteile:
- geringster Nestabstand möglich, da die Querbohrungen für die Steuerkanäle entfallen
- einfach nachrüstbar bei bestehenden Systemen
- einfachste Wartung, da die Ventile direkt in einer Platte verbaut sind

Gegenüber Systemen mit elektrisch betriebenen Nadeln oder Öffnungshubbegrenzungen ergeben sich folgende Vorteile:
- weniger mechanische Teile, geringerer Wartungsaufwand
- geringster Platzbedarf / geringster Abstand von Kavität zu Kavität
- kleine Schussgewichte regelbar, wo mechanische Drosseln nicht mehr prozesssicher einwirken
- bestehende Werkzeuge können einfach umgerüstet werden
- große Leistungsdichte von pneumatischen oder hydraulischen Systemen kann genutzt werden
- überlastsicher im Gegensatz zu elektrisch betriebene Nadeln
- hohe Verfügbarkeit der Ventile, kein Wartungsaufwand

Grundlage für die Steuerung ist ein pneumatisch oder hydraulisch angetriebener Nadelverschluss. Durch einen externen Trigger (Nadelverschluss öffnen) wird ein Signal an die Steuereinheit geleitet. Die Steuereinheit besitzt abhängig von der Anzahl der Nadelverschlussdüsen elektronische Ausgänge, mit welchen die Spulen der einzelnen Miniatur-Ventile angesteuert werden. Eine elektrisch angesteuerte Spule bewegt einen Anker, welcher den Medienversorgungskanal mechanisch öffnet. Die Miniaturventile sitzen direkt im Werkzeug verbaut nahe am Pneumatik/Hydraulik-Kolben des Nadelverschlusssystems. Das Medium kann entweder Druckluft oder eine Flüssigkeit sein. Falls eine Kavität einen schlechten Formteil produziert (ausgebrochener Formeinsatz, falsches Maß usw.) oder aufgrund erhöhter Reibung der Nadelverschluss dieser Kavität zu träge funktioniert, kann dieser über die Regelung ausgeschaltet werden. Dabei bleibt die Nadel permanent geschlossen, und es wird kein Material in die Kavität eingespritzt.

Die pneumatisch oder hydraulisch angetriebenen Nadelverschlusskolben öffnen innerhalb einer systemabhängigen Ansprechzeit. Diese ist im Normalfall immer gleich. Falls jedoch die Reibung im mechanischen System sich aufgrund Verschleißes der Dichtung oder Leckage im System (oder durch ein mechanisches Problem) erhöht oder verringert, kann diese Öffnungszeit sich im Laufe der Produktion verlängern oder unter Umständen auch verringern (z.B. wenn sich der Luftdruck bzw. der Hydraulikdruck erhöht).

In einer anderen Ausführungsform wird eine Vorrichtung bereitgestellt, umfassend
zumindest zwei Kavitäten zur Formung jeweils eines Produkts, zumindest zwei Einspritzdüsen, durch die Material in die jeweilige Kavität eingespritzt wird,
eine Formtrennung,
einen Verteilerkanal,
eine Medienversorgung,
einen Abluftkanal bzw. Rücklaufkanal,
zumindest zwei Verschlussnadeln, die die kraft- oder formschlüssig mit einem Kolben verbunden sind und die in die jeweilige Einspritzdüse eingeführt sind,
zumindest zwei Ventile zur Öffnung der jeweiligen Nadel sowie zumindest zwei Ventile zum Schließen der jeweiligen Nadel, wobei
die Ventile zur Öffnung der jeweiligen Nadel und die Ventile zum Schließen der jeweiligen Nadel unmittelbar anschließend an die jeweilige Verschlussnadel angeordnet sind und
eine Steuereinheit für die Ventile zur Öffnung der jeweiligen Nadel und die Ventile zum Schließen der jeweiligen Nadel vorgesehen ist.

Mit solch einer Vorrichtung können mehrere Gegenstände gleichzeitig hergestellt werden.

In einer Ausführungsform kann die Vorrichtung zumindest einen Sensor umfassen, der im Bewegungsbereich des Kolbens bzw. der Verschlussnadel angeordnet ist. In einer anderen Ausführungsform kann die Vorrichtung zumindest zwei Sensoren umfassen, die im Bewegungsbereich des Kolbens bzw. der Verschlussnadeln angeordnet sind.

Mit diesen Sensoren wird die "Offen"-Position und die "Geschlossen"-Position der Nadel detektiert. Durch die Messung der Öffnungszeit jedes Nadelverschlusssystems kann die unterschiedliche Öffnungszeit gemessen werden und unterschiedliche Öffnungszeiten von Aktoren kompensiert werden. Eine Auswertung für eine vorbeugende Wartung ist möglich. Im Fehlerfall, wenn ein Aktor nicht mehr öffnet, kann eine Warnung ausgegeben werden. Bei Überwachung der "Geschlossen"-Position kann eine Fehlfunktion detektiert werden. Die Laufzeitüberwachung kann wie beim "Öffnen" auf das Schließen angewendet werden. Die "offene" Position des Kolbens wird mittels Sensorik ermittelt. Mögliche Sensortypen sind z.B. ein mechanischer Schaltkontakt, ein induktiver oder kapazitiver Sensor (abhängig des Werkstoffes des Kolbens bzw. Aktors) oder ein Hallsensor. Weitere Sensortypen sind auch möglich, z.B. optische Sensoren. Durch die Berechnung der Zeitverzögerung zwischen Ansteuerzeit des Ventils und Ansprechen des Sensors kann die Öffnungszeitkonstante errechnet werden. Diese kann dazu verwendet werden, um die unterschiedlichen Öffnungszeiten zu kompensieren. Auch wenn sich während der Produktion die Öffnungszeit verlängert oder verkürzt, korrigiert die Regelung diese Zeit, und der Nadelverschluss bleibt mit unveränderter Drosselung in Betrieb. Zusätzlich dazu kann aufgrund dieser Zeitkonstante der Wartungszustand des Nadelverschlusssystems festgelegt werden. Sind Sensoren vorhanden, die die "Offen"-Position messen, und Sensoren vorhanden, die die "Geschlossen"-Position messen, kann auch detektiert werden, ob die Nadel in der Mitte zwischen "Offen"-Position und "Geschlossen"-Position steckengeblieben ist.

In einer Ausführungsform der Erfindung kann die Vorrichtung zumindest einen Sensor umfassen, der in Verbindung mit der Kavität steht. In einer Ausführungsform der Erfindung kann die Vorrichtung zumindest zwei Sensoren umfassen, die in Verbindung mit der jeweiligen Kavität stehen. Mit diesen Sensoren können die Einspritzmengen in der Kavität ermittelt werden. Wenn diese nicht mit den errechneten Werten übereinstimmen, können die Einspritzmengen anhand der Sensordaten angepasst werden.

In einer Ausführungsform der Erfindung kann die Vorrichtung zumindest einen Sensor umfassen, der im Verteilerkanal vor den Einspritzdüsen angeordnet ist. In einer Ausführungsform der Erfindung kann die Vorrichtung zumindest zwei Sensoren umfassen, die im Verteilerkanal vor den jeweiligen Einspritzdüsen angeordnet sind. Mit diesen Sensoren können die Einspritzmengen in der Einspritzdüse gemessen werden. Wenn diese nicht mit den errechneten Werten übereinstimmen, können die Einspritzmengen anhand der Sensordaten angepasst werden.

In einer Ausführungsform der Erfindung kann der Sensor, der im Bewegungsbereich des Kolbens bzw. der Verschlussnadel angeordnet ist, ein kapazitiver Sensor, ein induktiver Sensor, ein Hallsensor, ein Magnetsensor oder ein Schaltkontakt sein. Solchen Sensoren sind für das Bestimmen der Position der Verschlussnadel hervorragend geeignet.

In einer Ausführungsform der Erfindung kann der Sensor, der in Verbindung mit der jeweiligen Kavität steht, ein Druckaufnehmer oder ein Temperatursensor sein. Damit kann der Druck in der Kavität gemessen werden und die Einspritzmenge entsprechend gesteuert werden. Der Sensor kann allerdings auch ein Temperatursensor sein, welcher die kalte eingespritzte Masse detektiert.

In einer Ausführungsform der Erfindung kann der Sensor, der im Verteilerkanal vor den jeweiligen Einspritzdüsen angeordnet ist, ein Druckaufnehmer sein. Durch das Messen des Drucks können Rückschlüsse auf die Einspritzmenge und die Regulierung gezogen werden.

In einer Ausführungsform der Erfindung kann die Vorrichtung einen Sensor, vorzugsweise einem Druckaufnehmer, am Eingang des Verteilerkanals umfassen. Dadurch kann der Eingangsdruck in die Vorrichtung gemessen werden. Der Druck im Verteilerkanal kann zur Optimierung der Drosselstellungen herangezogen werden.

In einem anderen Aspekt betrifft die Erfindung die Verwendung einer Vorrichtung wie oben definiert zur Herstellung von Spritzgussteilen. Mittels einer solchen Vorrichtung können gleichförmige Teile mit geringsten Toleranzen und Schwankungen hergestellt werden, da eine exakte Kontrolle des Fertigungsprozesses möglich ist.

### Kurzbeschreibung der Zeichnungen

In der Zeichnung und den Beispielen werden die folgenden Bezugszeichen verwendet:
- 1a: Kavität 1a
- 1b: Kavität 1b
- 2a: Sensor Kavität 1a
- 2b: Sensor Kavität 1b
- 3a: Einspritzdüse Kavität 1a
- 3b: Einspritzdüse Kavität 1b
- 4: Formtrennung
- 5a: Sensor Verteilerkanal Kavität 1a
- 5b: Sensor Verteilerkanal Kavität 1b
- 6a: Verschlussnadel mit Kolben Kavität 1a
- 6b: Verschlussnadel mit Kolben Kavität 1b
- 7a: Ventil "Nadel öffnen" Kavität 1a
- 7b: Ventil "Nadel öffnen" Kavität 1b
- 8a: Ventil "Nadel schließen" Kavität 1a
- 8b: Ventil "Nadel schließen" Kavität 1b
- 9: Sensor Verteilerkanal Eingang
- 10: Verteilerkanal Eingang
- 11: Medienversorgung
- 12: Abluftkanal bzw. Rücklaufkanal
- 13a: Sensor Nadelposition Kavität 1a geschlossen
- 13b: Sensor Nadelposition Kavität 1b geschlossen
- 14a: Sensor Nadelposition Kavität 1a offen
- 14b: Sensor Nadelposition Kavität 1b offen

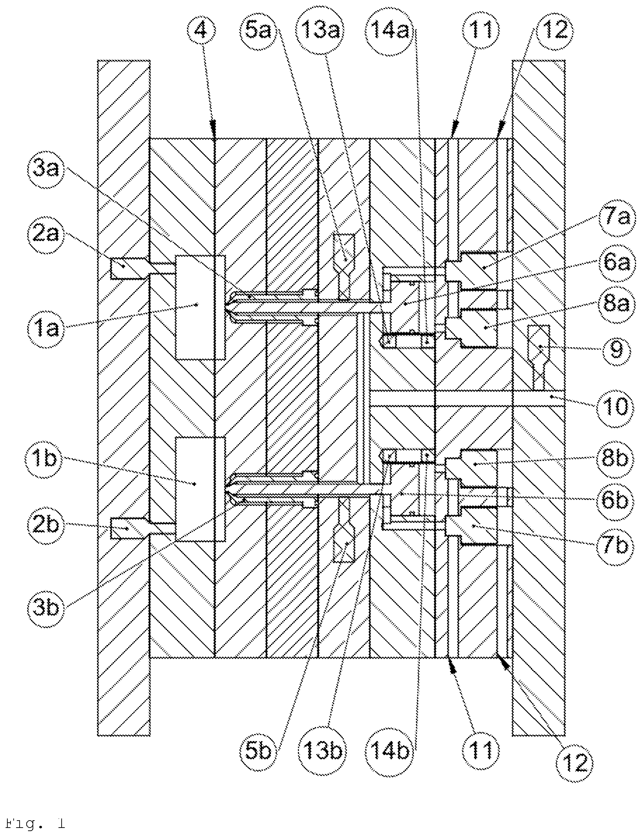

Fig. 1 zeigt eine Ausführungsform der Erfindung mit zwei Kavitäten.

### BEISPIEL

### Beispiel 1: Vorrichtung mit zumindest einer Kavität 1a

Die Vorrichtung für die Herstellung von Bauteilen im Spritzgussverfahren ist wie folgt aufgebaut und umfasst zumindest eine Kavität 1a zur Formung jeweils eines Produkts, zumindest eine Einspritzdüse 3a, durch die Material in die Kavität 1a eingespritzt wird,
eine Formtrennung 4,
einen Verteilerkanal 10,
eine Medienversorgung 11,
einen Abluftkanal bzw. Rücklaufkanal 12,
zumindest eine Verschlussnadel 6a, die die kraft- oder formschlüssig mit einem Kolben verbunden ist und die in die Einspritzdüse 3a eingeführt ist,
zumindest ein Ventil 7a zur Öffnung der Nadel 6a sowie zumindest ein Ventil 8a zum Schließen der Nadel 6a,
wobei
das Ventil 7a und das Ventil 8a unmittelbar anschließend an die Verschlussnadel 6a angeordnet sind und
eine Steuereinheit für das Ventil 7a und das Ventil 8a vorgesehen ist.

Die Ansteuerung von Nadelverschlusssystemen erfolgt durch direkt an der Verschlussnadel 6a (direkt am Aktor) sitzende Miniaturventile 7a, 8a. Durch die kurzen Ansteuerwege wird die Reaktion der Aktoren auf ein Minimum reduziert. Zusätzlich ist der Platzbedarf im Gegensatz zu bestehenden mechanischen Drosselsystemen geringer, und Düsenabstände können auf ein Minimum reduziert werden.

Gegenüber kaskadierten Nadelverschlusssystemen mit externen Ventilen ergeben sich folgende Vorteile:
- geringster Nestabstand möglich, da die Querbohrungen für die Steuerkanäle entfallen
- einfach nachrüstbar bei bestehenden Systemen
- einfachste Wartung, da die Ventile direkt in einer Platte verbaut sind

Gegenüber Systemen mit elektrisch betriebenen Nadeln oder Öffnungshubbegrenzungen ergeben sich folgende Vorteile:
- weniger mechanische Teile, geringerer Wartungsaufwand
- geringster Platzbedarf / geringster Abstand von Kavität zu Kavität
- kleine Schussgewichte regelbar, wo mechanische Drosseln nicht mehr prozesssicher einwirken
- bestehende Werkzeuge können einfach umgerüstet werden
- große Leistungsdichte von pneumatischen oder hydraulischen Systemen kann genutzt werden
- überlastsicher im Gegensatz zu elektrisch betriebene Nadeln
- hohe Verfügbarkeit der Ventile, kein Wartungsaufwand

Die Nadeln 6a können pneumatisch oder hydraulisch geöffnet und geschlossen werden. Durch einen externen Trigger (Nadelverschluss öffnen) wird ein Signal an die Steuereinheit geleitet. Die Steuereinheit besitzt abhängig von der Anzahl der Nadelverschlussdüsen elektronische Ausgänge, mit welchen die Spulen der einzelnen Miniatur-Ventile 7a, 8a angesteuert werden. Eine elektrisch angesteuerte Spule bewegt einen Anker, welcher den Medienversorgungskanal 11 mechanisch öffnet. Die Miniaturventile 7a, 8a sitzen direkt im Werkzeug verbaut nahe am Pneumatik/Hydraulik-Kolben des Nadelverschlusssystems. Das Medium kann Druckluft oder eine Flüssigkeit sein.

Die die kraft- oder formschlüssig Verbindung von Verschlussnadel 6a und Kolben ermöglicht den Austausch der Nadel, falls sie kaputt wird.

Falls eine Kavität 1a einen schlechten Formteil produziert (ausgebrochener Formeinsatz, falsches Maß usw.) oder aufgrund erhöhter Reibung der Nadelverschluss dieser Kavität 1a zu träge funktioniert, kann dieser über die Regelung ausgeschaltet werden. Dabei bleibt die Nadel 6a permanent geschlossen, und es wird kein Material in die Kavität 1a eingespritzt.

Die pneumatisch oder hydraulisch angetriebenen Nadelverschlusskolben öffnen innerhalb einer systemabhängigen Ansprechzeit. Diese ist im Normalfall immer gleich. Falls jedoch die Reibung im mechanischen System sich aufgrund Verschleißes der Dichtung oder Leckage im System (oder durch ein mechanisches Problem) erhöht, kann diese Öffnungszeit sich im Laufe der Produktion verlängern oder unter Umständen auch verringern (z.B. wenn sich der Luftdruck bzw. der Hydraulikdruck erhöht).

Das Ventil 7a, 8a kann beispielsweise ein 3/2- oder 5/2-Wegeventil sein, wobei sich die Zahlen auf "Anschlüsse/Wege" beziehen (ein "3/2-Wegeventil" bezeichnet beispielsweise ein Ventil mit 3 Anschlüssen und 2 Wegen; ein Anschluss kann beispielsweise ein Versorgungskanal, ein Arbeitskanal und ein Abluftkanal bzw. Rücklaufkanal sein; ein Weg kann beispielsweise "öffnen" oder "schließen" sein). Über den Versorgungskanal wird ein Medium, beispielsweise Druckluft oder eine Flüssigkeit, zum Schließen des Kolbens zugeführt. Über den Albluft- bzw. Rucklaufkanal wird das Medium, beispielsweise Druckluft oder eine Flüssigkeit, beim Öffnen wieder abgeleitet.

### Beispiel 2: Vorrichtung mit zumindest einer Kavität 1a, die zumindest einen Sensor 13a, 14a umfasst, der im Bewegungsbereich des Kolbens bzw. der Verschlussnadel 6a angeordnet ist.

Ausgehend von der in Beispiel 1 beschriebenen Vorrichtung kann diese zumindest einen Sensor 13a, 14a umfassen, der im Bewegungsbereich des Kolbens bzw. der Verschlussnadel 6a angeordnet ist.

Mit diesen Sensoren 13a, 14a wird die "Offen"-Position und die "Geschlossen"-Position der Nadel 6a detektiert. Durch die Messung der Öffnungszeit jedes Nadelverschlusssystems kann die unterschiedliche Öffnungszeit gemessen werden und unterschiedliche Öffnungszeiten von Aktoren kompensiert werden. Eine Auswertung für eine vorbeugende Wartung ist möglich. Im Fehlerfall, wenn ein Aktor nicht mehr öffnet, kann eine Warnung ausgegeben werden. Bei Überwachung der "Geschlossen"-Position kann eine Fehlfunktion detektiert werden. Die Laufzeitüberwachung kann wie beim "Öffnen" auf das Schließen angewendet werden. Die "offene" Position des Kolbens wird mittels Sensorik ermittelt. Mögliche Sensortypen sind z.B. ein mechanischer Schaltkontakt, ein induktiver oder kapazitiver Sensor (abhängig des Werkstoffes des Kolbens bzw. Aktors), ein Magnetsensor oder ein Hallsensor. Weitere Sensortypen sind auch möglich, z.B. optische Sensoren. Durch die Berechnung der Zeitverzögerung zwischen Ansteuerzeit des Ventils 7a, 8a und Ansprechen des Sensors 13a, 14a kann die Öffnungszeitkonstante errechnet werden. Diese kann dazu verwendet werden, um die unterschiedlichen Öffnungszeiten zu kompensieren. Auch wenn sich während der Produktion die Öffnungszeit verlängert oder verkürzt, korrigiert die Regelung diese Zeit, und der Nadelverschluss bleibt mit unveränderter Drosselung in Betrieb. Zusätzlich dazu kann aufgrund dieser Zeitkonstante der Wartungszustand des Nadelverschlusssystems festgelegt werden. Sind Sensoren 13a vorhanden, die die "Offen"-Position messen, und Sensoren 14a vorhanden, die die "Geschlossen"-Position messen, kann auch detektiert werden, ob die Nadel in der Mitte zwischen "Offen"-Position und "Geschlossen"-Position steckengeblieben ist. Die Vorrichtung kann nur mit einen Sensor 13a oder nur mit einem Sensor 14a versehen sein oder auch mit beiden Sensoren 13a, 14a.

### Beispiel 3: Vorrichtung mit zumindest einer Kavität 1a, die zumindest einen Sensor 2a umfasst, der in Verbindung mit der Kavität 1a steht

Ausgehend von der in Beispiel 1 oder Beispiel 2 beschriebenen Vorrichtung kann diese Vorrichtung zumindest einen Sensor 2a umfassen, der in Verbindung mit der Kavität 1a steht.

Mit diesem Sensor 2a kann die Einspritzmengen in der Kavität 1a ermittelt werden. Wenn diese nicht mit den errechneten Werten übereinstimmen, können die Einspritzmengen anhand der Sensordaten angepasst werden. Der Sensor 2a kann ein Druckaufnehmer oder ein Temperatursensor sein. Damit kann der Druck in der Kavität 1a gemessen werden und die Einspritzmenge entsprechend gesteuert werden. Der Sensor 2a kann allerdings auch ein Temperatursensor sein, welcher die kalte eingespritzte Masse detektiert.

### Beispiel 4: Vorrichtung mit zumindest einer Kavität 1a, die zumindest einen Sensor 5a umfasst, der im Verteilerkanal 10 vor der Einspritzdüse 3a angeordnet ist.

Ausgehend von der in Beispiel 1 oder Beispiel 2 oder Beispiel 3 beschriebenen Vorrichtung kann diese Vorrichtung zumindest einen Sensor 5a umfassen, der im Verteilerkanal 10 vor den Einspritzdüsen 3a angeordnet ist. Mit diesem Sensor 5a kann der Druck vor der Einspritzdüse 3a gemessen werden. Wenn diese nicht mit den errechneten Werten übereinstimmen, können die Einspritzmengen anhand der Sensordaten angepasst werden. Der Sensor 5a kann ein Druckaufnehmer sein. Der Druck vor den Einspritzdüsen kann zur Optimierung der Drosselstellungen herangezogen werden.

### Beispiel 5: Vorrichtung mit zumindest einer Kavität 1a, die einen Sensor 9 am Eingang des Verteilerkanals 10 umfasst.

Ausgehend von der in Beispiel 1 oder Beispiel 2 oder Beispiel 3 oder Beispiel 4 beschriebenen Vorrichtung kann diese Vorrichtung einen Sensor 9 am Eingang des Verteilerkanals 10 umfassen. Dadurch kann der Eingangsdruck in die Vorrichtung gemessen werden. Der Sensor 9 kann ein Druckaufnehmer sein. Damit kann der Druck im Verteilerkanal 10 gemessen werden. Der Druck im Verteilerkanal 10 kann zur Optimierung der Drosselstellungen herangezogen werden.

### Beispiel 6: Vorrichtung mit zumindest einer Kavität 1a mit einer externen Waage

Ausgehend von einer in den vorangegangenen Beispielen beschriebenen Vorrichtung kann auch eine externe Waage vorhanden sein. Die ausgestoßenen Gegenstände werden gewogen und mit dem Soll-Wert verglichen. Eine Steuereinheit gibt Befehle an die Ventile 7a, 8a, die Öffnungszeiten anzupassen, um auf den Soll-Wert zu kommen.

### Beispiel 7: Vorrichtung mit zumindest zwei Kavitäten 1a, 1b

Ausgehend von einer in den vorangegangenen Beispielen beschriebenen Vorrichtung können auch zumindest zwei Kavitäten 1a, 1b vorhanden sein, wobei alle anderen beschriebenen Elemente, also Verschlussnadeln 6a, 6b, Einspritzdüsen 3a, 3b, Ventile 7a, 7b, Ventile 8a, 8b, Sensoren 13a, 13b, Sensoren 14a, 14b, Sensoren 2a, 2b, Sensoren 5a, 5b, zumindest zweifach vorhanden sind. Die jeweiligen Elemente können auch dreifach, vierfach, fünffach oder öfter vorhanden sein. Je öfter, desto mehr Gegenstände können gleichzeitig hergestellt werden. Die in den oben angeführten Beispielen 1 bis 6 angeführten Eigenschaften und Vorteile gelten auch für eine Vorrichtung mit zumindest zwei Kavitäten 1a, 1b.

### Beispiel 8: Verwendung einer Vorrichtung wie in einem der Beispiele 1 bis 7 beschrieben zur Herstellung von Spritzgussteilen

Es wird eine in einem der Beispiele 1 bis 7 beschriebene Vorrichtung in diesem Beispiel verwendet.

Der Rohstoff wird über den Verteilerkanal 10 in die Einspritzdüse 3a geleitet. Durch Öffnen des Ventils 7a wird die Verschlussnadel 6a geöffnet und der Rohstoff in die Kavität 1a geleitet. Nach dem Aushärten wird der Gegenstand ausgeworfen. Danach beginnt das Verfahren von vorne. Dadurch können je nachdem, wie viele Kavitäten 1a vorhanden sind, eines oder mehrere Gegenstände hergestellt werden. Optionale Sensoren 13a, 14a, 2a, 5a und 9 können wie oben beschrieben die Menge des eingespritzten Rohstoffs messen. Wird eine Abweichung vom Soll-Wert detektiert, kann durch Ändern der Öffnungszeiten der Verschlussnadel 6a gegengesteuert werden.

### Bewertungskriterien von Spritzgießteilen

### Unterfüllung

- verringertes Teilegewicht
- verkleinertes Maß, z.B. Längsmaße
- Fließstelle
- Kerbe
- nicht ausgeprägte Oberfläche
- nicht gefüllter Übertritt, falls vorhanden

### Überspritzung

- Grat auf Teilen
- erhöhtes Teilegewicht
- größeres Maß der Teile, z.B. Längsmaße

### Möglichkeiten der Messung von Bewertungskriterien

- optisch über Kamerasystem
- Messung des Teilegewichtes durch Messeinrichtung, z.B. Waage
- optisch durch Maschinenbediener
- taktil

### Anbindung der Bewertungsverfahren an die Regelung

- vollautomatisch über Schnittstellen
- halbautomatisch über Eingabe von Werten über HMI durch Bediener (Teile werden manuell gewogen bzw. bewertet und direkt in die Bedienoberfläche eingegeben, die optimale Einstellung der Drosseln wird automatisch errechnet und eingestellt)
- manuell

### Schnittstellen

- seriell
- parallel
- BUS-Systeme (z.B.: ASI, Ethernet, Profibus usw.)
- HMI

### Regelkreis

- geschlossene Regelschleife durch Rückführung der Ausgangsvariablen (Füllgrad der Teile) (siehe folgende Beispiele)

### Beispiel 9: Verwendung einer Vorrichtung wie in einem der Beispiele 1 bis 7 beschrieben zur Herstellung von Spritzgussteilen nach dem "Funktionsprinzip Regelschleife"

Ausgehend von einer Vorrichtung aus Beispiel 1 bis 7 und basierend auf der Verwendung aus Beispiel 8 erfolgt die Herstellung nach dem "Funktionsprinzip Regelschleife". Eine geschlossene Regelschleife ermöglicht eine schnelle Abstimmung von Nadelverschluss-Drossel-Systemen. Die produzierten Teile werden anhand von optischen oder physikalischen Kriterien automatisch oder manuell bewertet und für die darauffolgenden Spritzprozesse herangezogen, um die Düsenregulierung zu justieren. Ein integrierter Regler, z.B. Zustands- oder PID-Regler, optimieren die Düseneinstellung innerhalb weniger Zyklen. Inbetriebnahmen werden verkürzt, im Produktionsbetrieb kann durch eine vollautomatische Bewertung der produzierten Teile eine gleichbleibende Teilequalität erreicht werden.

### Beispiel 10: Verwendung einer Vorrichtung wie in einem der Beispiele 1 bis 7 beschrieben zur Herstellung von Spritzgussteilen nach dem Funktionsprinzip "geschlossene Regelschleife"

Ausgehend von einer Vorrichtung aus Beispiel 1 bis 7 und basierend auf der Verwendung aus Beispiel 8 oder 9 erfolgt die Herstellung nach dem Funktionsprinzip "geschlossene Regelschleife". Die Formteile werden gespritzt und nach dem Spritzprozess einer Bewertung unterzogen z.B. Gewicht, Größe, optisch ein Indikator identifiziert. Diese Information fließt zurück an die Steuereinheit und verlängert oder verkürzt die "Offen"-Position des Nadelverschluss dieser Kavität.

Eine weitere Möglichkeit besteht durch die Messung von Druck oder Temperatur innerhalb der Kavität wie es bei Thermoplast-Werkzeugen üblich ist. Durch diese Information, wenn der Teil sich füllt, kann auf die Balancierung der einzelnen Kavitäten Einfluss genommen werden.

Eine weitere Möglichkeit besteht in der optischen Kontrolle von Bauteilen und der Veränderung der Öffnungszeiten der Aktoren.

### Beispiel 11: Verwendung einer Vorrichtung wie in einem der Beispiele 1 bis 7 beschrieben zur Herstellung von Spritzgussteilen nach dem Funktionsprinzip "Waage"

Ausgehend von einer Vorrichtung aus Beispiel 1 bis 7 und basierend auf der Verwendung aus Beispiel 8, 9 oder 10 erfolgt die Herstellung nach dem Funktionsprinzip "Waage".

Durch fertigungstechnische Schwankungen im Verteilersystem von Spritzgießwerkzeugen kann es vorkommen, dass bei Mehrkavitätswerkzeugen einzelne Kavitäten schneller gefüllt werden als andere. Das Ergebnis ist hier, dass die Teile nicht denselben Füllgrad haben und ein zu kleines oder zu großes Maß aufweisen können oder Fehlstellen aufweisen.

Durch das Einstellsystem (Kaskadierung von Nadelverschlusssystem) kann der Füllgrad jeder einzelnen Kavität angepasst werden.

Lösung: Jeder einzelne Formteil wird mittels Waage gemessen. Die dadurch erhaltene Gewichtsinformation jedes einzelnen Spritzgießteils wird der Steuereinheit übermittelt (manuell oder automatisiert). Die Steuereinheit errechnet das mittlere Gewicht und die somit benötigte Verzögerungszeit jeder einzelnen Kavität. Durch einen mehrmaligen Durchlauf dieser Einstellmethode stellt sich die optimale Einstellung ein. Die Waage kann intern oder extern sein.

### Beispiel 12: Verwendung einer Vorrichtung wie in einem der Beispiele 1 bis 7 beschrieben zur Herstellung von Spritzgussteilen nach dem Funktionsprinzip "Gesamtschussgewicht"

Ausgehend von einer Vorrichtung aus Beispiel 1 bis 7 und basierend auf der Verwendung aus Beispiel 8, 9, 10 oder 11 erfolgt die Herstellung nach dem Funktionsprinzip "Gesamtschussgewicht".

Durch das Einstellsystem kann der Füllgrad jeder einzelnen Kavität eingestellt werden. Die gesamte Menge an eingespritztem Material bestimmt jedoch die Spritzgießmaschine. Durch die gleichzeitige Verringerung oder Erhöhung der "Drosselposition" bzw. des Öffnungszeitpunkts kann das Gesamtschussgewicht nur geringfügig verändert werden.

Lösung: Die Steuereinheit gibt das erhaltene Gesamtschussgewicht an die Spritzgießmaschine weiter bzw. ist in der Steuereinheit das optimale Gesamtschussgewicht hinterlegt, und es wird der geforderte Wert an die Spritzgießmaschine weitergegeben.

## Patentansprüche

1. Vorrichtung für die Herstellung von Bauteilen im Spritzgussverfahren, umfassend
zumindest eine Kavität (1a) zur Formung jeweils eines Produkts, zumindest eine Einspritzdüse (3a), durch die Material in die Kavität (1a) eingespritzt wird,
eine Formtrennung (4),
einen Verteilerkanal (10),
eine Medienversorgung (11),
einen Abluftkanal bzw. Rücklaufkanal (12),
zumindest eine Verschlussnadel (6a), die die kraft- oder formschlüssig mit einem Kolben verbunden ist und die in die Einspritzdüse (3a) eingeführt ist,
zumindest ein Ventil (7a) zur Öffnung der Nadel (6a) sowie zumindest ein Ventil (8a) zum Schließen der Nadel (6a),
**dadurch gekennzeichnet, dass**
das Ventil (7a) zur Öffnung der Nadel (6a) und das Ventil (8a) zum Schließen der Nadel (6a) unmittelbar anschließend an die Verschlussnadel (6a) angeordnet sind und eine Steuereinheit für das Ventil (7a) zur Öffnung der Nadel und das Ventil (8a) zum Schließen der Nadel (6a) vorgesehen ist.

2. Vorrichtung für die Herstellung von Bauteilen im Spritzgussverfahren, umfassend
zumindest zwei Kavitäten (1a, 1b) zur Formung jeweils eines Produkts,
zumindest zwei Einspritzdüsen (3a, 3b), durch die Material in die jeweilige Kavität (1a, 1b) eingespritzt wird,
eine Formtrennung (4),
einen Verteilerkanal (10),
eine Medienversorgung (11),
einen Abluftkanal bzw. Rücklaufkanal (12),
zumindest zwei Verschlussnadeln (6a, 6b), die die kraft- oder formschlüssig mit einem Kolben verbunden sind und die in die jeweilige Einspritzdüse (3a, 3b) eingeführt sind,
zumindest zwei Ventile (7a, 7b) zur Öffnung der jeweiligen Nadel (6a, 6b) sowie zumindest zwei Ventile (8a, 8b) zum Schließen der jeweiligen Nadel (6a, 6b),
**dadurch gekennzeichnet, dass**
die Ventile (7a, 7b) zur Öffnung der jeweiligen Nadel (6a, 6b) und die Ventile (8a, 8b) zum Schließen der jeweiligen Nadel (6a, 6b) unmittelbar anschließend an die jeweilige Verschlussnadel (6a, 6b) angeordnet sind und
eine Steuereinheit für die Ventile (7a, 7b) zur Öffnung der jeweiligen Nadel (6a, 6b) und die Ventile (8a, 8b) zum Schließen der jeweiligen Nadel (6a, 6b) vorgesehen ist.

3. Vorrichtung nach Anspruch 1, **dadurch gekennzeichnet, dass** die Vorrichtung zumindest einen Sensor (14a) umfasst, der im Bewegungsbereich des Kolben bzw. der Verschlussnadel (6a) angeordnet ist.

4. Vorrichtung nach Anspruch 2, **dadurch gekennzeichnet, dass** die Vorrichtung zumindest zwei Sensoren (14a, 14b) umfasst, die im Bewegungsbereich des Kolben bzw. der Verschlussnadeln (6a, 6b) angeordnet sind.

5. Vorrichtung nach Anspruch 1 oder 3, **dadurch gekennzeichnet, dass**
die Vorrichtung zumindest einen Sensor (13a) umfasst, der im Bewegungsbereich des Kolben bzw. der Verschlussnadel (6a) angeordnet ist.

6. Vorrichtung nach Anspruch 2 oder 4, **dadurch gekennzeichnet, dass**
die Vorrichtung zumindest zwei Sensoren (13a, 13b) umfasst, die im Bewegungsbereich des Kolben bzw. der Verschlussnadeln (6a, 6b) angeordnet sind.

7. Vorrichtung nach Anspruch 1, 3 oder 5, **dadurch gekennzeichnet, dass**
die Vorrichtung zumindest einen Sensor (2a) umfasst, der in Verbindung mit der Kavität (1a) steht.

8. Vorrichtung nach Anspruch 2, 4 oder 6, **dadurch gekennzeichnet, dass**
die Vorrichtung zumindest zwei Sensoren (2a, 2b) umfasst, die in Verbindung mit der jeweiligen Kavität (1a, 1b) stehen.

9. Vorrichtung nach Anspruch 1, 3, 5 oder 7, **dadurch gekennzeichnet, dass**
die Vorrichtung zumindest einen Sensor (5a) umfasst, der im Verteilerkanal (10) vor der Einspritzdüsen (3a) angeordnet ist.

10. Vorrichtung nach Anspruch 2, 4, 6 oder 8, **dadurch gekennzeichnet, dass**
die Vorrichtung zumindest zwei Sensoren (5a, 5b) umfasst, die im Verteilerkanal (10) vor der jeweiligen Einspritzdüsen (3a, 3b) angeordnet sind.

11. Vorrichtung nach einem der Ansprüche 3 bzw. 4 bis 10, **dadurch gekennzeichnet, dass**
der Sensor (14a, 14b) ein kapazitiver Sensor, ein induktiver Sensor, ein Hallsensor, ein Magnetsensor oder ein Schaltkontakt ist.

12. Vorrichtung nach einem der Ansprüche 5 bzw. 6 bis 11, **dadurch gekennzeichnet, dass**
der Sensor (13a, 13b) ein kapazitiver Sensor, ein induktiver Sensor, ein Hallsensor, ein Magnetsensor oder ein Schaltkontakt ist.

13. Vorrichtung nach einem der Ansprüche 7 bzw. 8 bis 12, **dadurch gekennzeichnet, dass**
der Sensor (2a, 2b) ein Druckaufnehmer oder ein Temperatursensor ist.

14. Vorrichtung nach einem der Ansprüche 9 bzw. 10 bis 13, **dadurch gekennzeichnet, dass**
der Sensor (5a, 5b) ein Druckaufnehmer ist.

15. Vorrichtung nach einem der vorangegangenen Ansprüche, **dadurch gekennzeichnet, dass**
die Vorrichtung einen Sensor (9), vorzugsweise einen Druckaufnehmer, am Eingang des Verteilerkanals (10) umfasst.

16. Verwendung einer Vorrichtung nach einem der Ansprüche 1 bis 15 zur Herstellung von Spritzgussteilen.

## Claims

1. A device for producing components using an injection molding method, said device comprising
at least one cavity (1a), each for forming a product,
at least one injection nozzle (3a) through which material is injected into the cavity (1a),
a mold release element (4),
a distribution channel (10),
a media supply (11),
an exhaust air channel or return channel (12),
at least one shut-off needle (6a) that is connected to a piston in a force-fitting or form-fitting manner and that is inserted into the injection nozzle (3a),
at least one valve (7a) for opening the needle (6a), and
at least one valve (8a) for closing the needle (6a), **characterized in that**
the valve (7a) for opening the needle (6a) and the valve (8a) for closing the needle (6a) are arranged directly adjacent to the shut-off needle (6a), and
a control unit for the valve (7a) for opening the needle (6a) and the valve (8a) for closing the needle (6a) is provided.

2. The device for producing components using an injection molding method, comprising
at least two cavities (1a, 1b) for respectively forming products,
at least two injection nozzles (3a, 3b) through which material is injected into the respective cavities (1a, 1b),
a mold release element (4),
a distribution channel (10),
a media supply (11),
an exhaust air channel or return channel (12),
at least two shut-off needles (6a, 6b) that are connected to a piston in a force-fitting or form-fitting manner and that are inserted into respective injection nozzles (3a, 3b),
at least two valves (7a, 7b) for opening a respective needle (6a, 6b), and
at least two valves (8a, 8b) for closing a respective needle (6a, 6b),
**characterized in that**
the valves (7a, 7b) for opening a respective needle (6a, 6b) and the valves (8a, 8b) for closing a respective needle (6a, 6b) are arranged directly adjacent to respective shut-off needles (6a, 6b), and
a control unit for the valves (7a, 7b) for opening a respective needle (6a, 6b) and the valves (8a, 8b) for closing a respective needle (6a, 6b) is provided.

3. The device according to claim 1, **characterized in that** the device comprises at least one sensor (14a) which is arranged in the movement range of the piston or the shut-off needle (6a).

4. The device according to claim 2, **characterized in that** the device comprises at least two sensors (14a, 14b) which are arranged in the movement range of the piston or the shut-off needles (6a, 6b).

5. The device according to claim 1 or 3, **characterized in that**
the device comprises at least one sensor (13a) which is arranged in the movement range of the piston or the shut-off needle (6a).

6. The device according to claim 2 or 4, **characterized in that**
the device comprises at least two sensors (13a, 13b) which are arranged in the movement range of the piston or the shut-off needles (6a, 6b).

7. The device according to claim 1, 3 or 5, **characterized in that**
the device comprises at least one sensor (2a) which is connected to the cavity (1a).

8. The device according to claim 2, 4 or 6, **characterized in that**
the device comprises at least two sensors (2a, 2b) which are connected to the respective cavities (1a, 1b).

9. The device according to claim 1, 3, 5 or 7, **characterized in that**
the device comprises at least one sensor (5a) which is arranged in front of the injection nozzle (3a) in the distribution channel (10).

10. The device according to claim 2, 4, 6 or 8, **characterized in that**
the device comprises at least two sensors (5a, 5b) which are arranged in front of the respective injection nozzles (3a, 3b) in the distribution channel (10).

11. The device according to one of the claims 3 or 4 to 10, **characterized in that**
the sensor (14a, 14b) is a capacitive sensor, an inductive sensor, a Hall effect sensor, a magnetic sensor, or a switching contact.

12. The device according to one of the claims 5 or 6 to 11, **characterized in that**
the sensor (13a, 13b) is a capacitive sensor, an inductive sensor, a Hall effect sensor, a magnetic sensor, or a switching contact.

13. The device according to one of the claims 7 or 8 to 12, **characterized in that**
the sensor (2a, 2b) is a pressure transducer or a temperature sensor.

14. The device according to one of the claims 9 or 10 to 13, **characterized in that**
the sensor (5a, 5b) is a pressure transducer.

15. The device according to one of the preceding claims, **characterized in that**
the device comprises a sensor (9), preferably a pressure transducer, at the entrance of the distribution channel (10).

16. A use of a device according to one of the claims 1 to 15 for producing injection-molded parts.

## Revendications

1. Dispositif pour la production de composants par un procédé de moulage par injection, ledit dispositif comprenant au moins une cavité (1a), chacune pour former un produit,
au moins un injecteur (3a) à travers duquel du matériel est injecté dans la cavité (1a),
un élément de démoulage (4),
un canal de distribution (10),
une alimentation en fluide (11),
un canal à l'air d'échappement ou un canal de retour (12),
au moins une aiguille de fermeture (6a) qui est reliée à un piston par force ou par forme et qui est insérée dans l'injecteur (3a),
au moins une soupape (7a) pour ouvrir l'aiguille (6a) et
au moins une soupape (8a) pour fermer l'aiguille (6a), **caractérisé en ce que**
la soupape (7a) pour ouvrir l'aiguille (6a) et la soupape (8a) pour fermer l'aiguille (6a) sont disposées de manière directement adjacente par rapport à l'aiguille de fermeture (6a), et
une unité de commande pour la soupape (7a) pour ouvrir l'aiguille (6a) et pour la soupape (8a) pour fermer l'aiguille (6a) est fournie.

2. Dispositif pour la production de composants par un procédé de moulage par injection, ledit dispositif comprenant au moins deux cavités (la, 1b), chacune pour former un produit,
au moins deux injecteurs (3a, 3b) à travers desquels du matériel est injecté dans la cavité respective (1a, 1b),
un élément de démoulage (4),
un canal de distribution (10),
une alimentation en fluide (11),
un canal à l'air d'échappement ou un canal de retour (12),
au moins deux aiguilles de fermeture (6a, 6b) qui sont reliées à un piston par force ou par forme et qui sont insérée dans l'injecteur respectif (3a, 3b),
au moins deux soupapes (7a, 7b) pour ouvrir l'aiguille respective (6a, 6b) et
au moins deux soupapes (8a, 8b) pour fermer l'aiguille respective (6a, 6b),
**caractérisé en ce que**
les soupapes (7a, 7b) pour ouvrir l'aiguille respective (6a, 6b) et les soupapes (8a, 8b) pour fermer l'aiguille respective (6a, 6b) sont disposées de manière directement adjacente par rapport à l'aiguille de fermeture respective (6a, 6b), et
une unité de commande pour les soupapes (7a, 7b) pour ouvrir l'aiguille respective (6a, 6b) et pour les soupapes (8a, 8b) pour fermer l'aiguille respective (6a, 6b) est fournie.

3. Dispositif selon la revendication 1, **caractérisé en ce que** le dispositif comprend au moins un capteur (14a) qui est disposé dans la zone de mouvement du piston ou de l'aiguille de fermeture (6a).

4. Dispositif selon la revendication 2, **caractérisé en ce que** le dispositive comprend au moins deux capteurs (14a, 14b) qui sont disposés dans la zone de mouvement du piston ou des aiguilles de fermeture (6a, 6b).

5. Dispositif selon la revendication 1 ou 3, **caractérisé en ce que**
le dispositif comprend au moins un capteur (13a) qui est disposé dans la zone de mouvement du piston ou de l'aiguille de fermeture (6a).

6. Dispositif selon la revendication 2 ou 4, **caractérisé en ce que**
le dispositive comprend au moins deux capteurs (13a, 13b), qui sont disposés dans la zone de mouvement du piston ou des aiguilles de fermeture (6a, 6b).

7. Dispositif selon la revendication 1, 3 ou 5, **caractérisé en ce que**
le dispositif comprend au moins un capteur (2a) qui es relié à la cavité (1a).

8. Dispositif selon la revendication 2, 4 ou 6, **caractérisé en ce que**
le dispositive comprend au moins deux capteurs (2a, 2b) qui sont reliés à la cavité respective (1a, 1b).

9. Dispositif selon la revendication 1, 3, 5 ou 7, **caractérisé en ce que**
le dispositif comprend au moins un capteur (5a) qui est disposé dans le canal de distribution (10) avant l'injecteur respectif (3a).

10. Dispositif selon la revendication 2, 4, 6 ou 8, **caractérisé en ce que**
le dispositive comprend au moins deux capteurs (5a, 5b) qui sont disposés dans le canal de distribution (10) avant les injecteurs respectifs (3a, 3b).

11. Dispositif selon l'une des revendications 3 ou 4 à 10, **caractérisé en ce que**
le capteur (14a, 14b) est un capteur capacitif, un capteur inductif, un capteur à effet Hall, un capteur magnétique ou un contact commutateur.

12. Dispositif selon l'une des revendications 5 ou 6 à 11, **caractérisé en ce que**
le capteur (13a, 13b) est un capteur capacitif, un capteur inductif, un capteur à effet Hall, un capteur magnétique ou un contact commutateur.

13. Dispositif selon l'une des revendications 7 ou 8 à 12, **caractérisé en ce que**
le capteur (2a, 2b) est un transducteur de pression ou un capteur de température.

14. Dispositif selon l'une des revendications 9 ou 10 à 13, **caractérisé en ce que**
le capteur (5a, 5b) est un transducteur de pression.

15. Dispositif selon l'une des revendications précédentes, **caractérisé en ce que**
le dispositif comprend un capteur (9), de préférence un transducteur de pression, à l'entrée du canal de distribution (10).

16. L'utilisation d'un dispositif selon l'une des revendications 1 à 15 pour la production de pièces moulées par injection.
